# EUROPEAN PATENT SPECIFICATION

(11) **EP 4 012 170 B1**
(45) Date of publication and mention of the grant of the patent: **18.09.2024**
(21) Application number: 21214174.1
(22) Date of filing: 13.12.2021
(51) Int. Cl.: F02K 1/72

(54) **MULTI-LOBED BULLNOSE RAMP**
MEHRLAPPIGE BULLNOSE-RAMPE
RAMPE ARRONDIE MULTILOBES

(30) Priority: 12.12.2020 IN 202011054154; 14.10.2021 US 202117501862
(43) Date of publication of application: 15.06.2022
(73) Proprietor: Rohr, Inc., Chula Vista, CA 91910-2098 (US)
(72) Inventor: CHILUKURI, Radhakrishna, San Diego, 92129 (US); TAPADAR, Hussain Mahamed Javed, Chula Vista, 91910-2098 (US)
(74) Representative: Dehns

(56) References cited:
- EP-A1- 2 863 038
- EP-A1- 2 937 548
- US-A1- 2015 308 376

## Description

### FIELD

The present disclosure relates generally to aircraft propulsion systems and, more particularly, to thrust reversers used in aircraft propulsion systems.

### BACKGROUND

Aircraft propulsion systems that employ gas turbine engines for thrust typically include a thrust reverser configured to regulate a bypass flow stream within a bypass duct of the gas turbine engine. The thrust reverser defines a forward-thrust configuration, in which the bypass flow stream is employed to generate thrust in a forward direction, and a reverse-thrust configuration, in which the bypass flow stream is employed to generate thrust in a reverse direction that is opposite the forward direction.

Placing the thrust reverser in the reverse-thrust configuration generally redirects the bypass flow stream through a thrust reverser duct located radially outward of the bypass duct. The redirection typically includes a significant change in the direction of flow of the bypass flow stream. In order to control the change in direction of the flow, a bullnose ramp or fairing may be utilized to define an inner curvature of the directional change.

In order to provide a desired level of performance of the thrust reverser (or a desired magnitude of the reverse-thrust) it may be desirable to design the thrust reverser such that a boundary layer fluid flow within a boundary layer that is adjacent to the bullnose fairing does not separate from the bullnose fairing. Thus, the inner curvature that is defined by the bullnose ramp or fairing may be dictated by a desired mass flow rate of the bypass flow stream through the reverser duct, a desired average velocity of the bypass flow stream through the reverser duct or the desired magnitude of the reverse-thrust.

EP 2863038 A1 and US 2015/308376 A1 disclosed prior art assemblies.

### SUMMARY

In a first aspect, a bullnose ramp for use in a thrust reverser is provided as set forth in claim 1.

In various embodiments, the change in slope between the forward portion and the aft portion is represented by a discontinuity. In various embodiments, the discontinuity extends between the forward portion and the aft portion at an essentially constant axial position with respect to an axial direction. In various embodiments, the forward portion is configured to induce separation of a bypass flow stream from a surface of the bullnose ramp and the aft portion is configured to induce reattachment of the bypass flow stream to the surface of the bullnose ramp

In various embodiments, the first profile is a first sinuous profile with respect to an axial direction. In various embodiments, the second profile is a second sinuous profile with respect to the axial direction. In various embodiments, the first sinuous profile is characterized by a first curvature profile, the first curvature profile extending from a forward axial position of the bullnose ramp to the transition portion. In various embodiments, the second sinuous profile is characterized by a second curvature profile, the second curvature profile extending from the transition portion to an aft axial position of the bullnose ramp. In various embodiments, the first curvature profile is characterized by a first set of curvature values, the second curvature profile is characterized by a second set of curvature values, and the second set of curvature values is lesser in magnitude than the first set of curvature values.

In another aspect, a thrust reverser is provided according to claim 10.

In various embodiments, the change in slope between the forward portion and the aft portion is represented by a discontinuity in at least one of the change in slope or a rate of change in the change in slope. In various embodiments, the discontinuity extends between the forward portion and the aft portion at an essentially constant axial position with respect to the axial direction.

In another aspect, an assembly for an aircraft propulsion system is provided according to claim 13.

In various embodiments, the change in slope between the forward portion and the aft portion is represented by a discontinuity in at least one of the change in slope or a rate of change in the change in slope. In various embodiments, the change in slope extends between the forward portion and the aft portion at an essentially constant axial position with respect to the axial direction.

These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A and 1B are schematic illustrations of an aircraft propulsion system with a thrust reverser in a stowed position and a deployed position, respectively, in accordance with various embodiments;
FIGS. 2A and 2B are schematic side-sectional illustrations of a thrust reverse in a stowed position and a deployed position, respectively, in accordance with various embodiments;
FIG. 3 is a schematic side-sectional illustration of a thrust reverser in a deployed position, in accordance with various embodiments;
FIGS. 4A and 4B are graphs illustrating ramp profiles and ramp curvatures of various bullnose ramps, in examples not forming of the claimed invention; and
FIG. 5 is a graph illustrating a ramp profile of a bullnose ramp, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation.

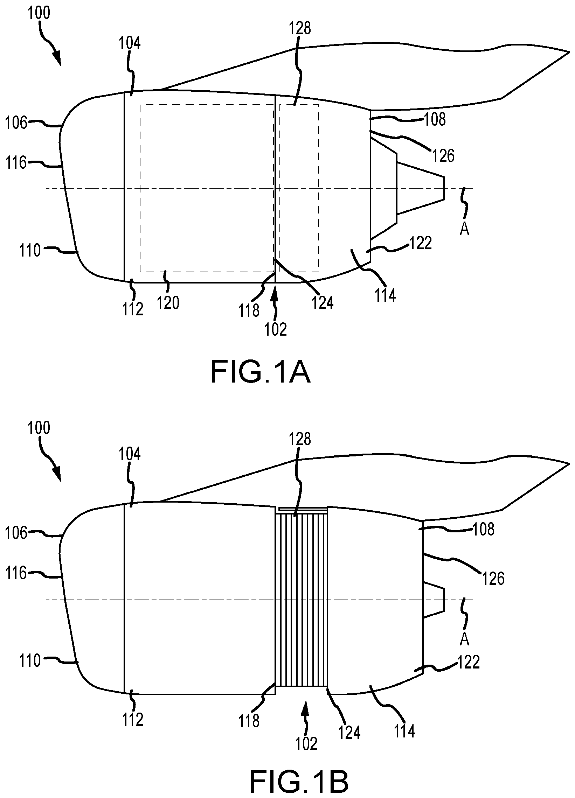

Referring now to the drawings, FIGS. 1A and 1B provide schematic illustrations of an aircraft propulsion system 100 with a thrust reverser 102 in a stowed position and a deployed position, respectively. The aircraft propulsion system 100 includes a nacelle 104 and a gas turbine engine housed within the nacelle 104. Without loss of generality, the gas turbine engine may be configured as a high-bypass turbofan engine or, alternatively, the gas turbine engine may be configured as any other type of gas turbine engine capable of propelling an aircraft during flight. The nacelle 104 is configured to house and provide an aerodynamic cover for the gas turbine engine. An outer structure of the nacelle 104 extends along an axial centerline A (or an axial direction) between a nacelle forward end 106 and a nacelle aft end 108. The nacelle 104 includes an inlet structure 110, one or more fan cowls 112 (*e.g.,* a left-side fan cowl and a right-side fan cowl) and a nacelle aft structure 114, which is configured as part of or may include the thrust reverser 102. The inlet structure 110 is disposed at the nacelle forward end 106. The inlet structure 110 is configured to direct a stream of air through an inlet opening 116 at the nacelle forward end 106 and into a fan section of the gas turbine engine.

Each of the one or more fan cowls 112 is typically disposed axially between the inlet structure 110 and the nacelle aft structure 114. Each of the one or more fan cowls 112 is disposed at (*e.g.,* on, adjacent or proximate) an aft end 118 of a stationary portion of the nacelle 104, and extends forward to the inlet structure 110. Each of the one or more fan cowls 112 is also generally axially aligned with a fan section of the gas turbine engine. The one or more fan cowls 112 are configured to provide an aerodynamic covering for a fan case 120, which circumscribes the fan section and partially forms a forward outer peripheral boundary of a bypass flow stream of the aircraft propulsion system 100. The term "stationary portion" is used above to describe a portion of the nacelle 104 that is stationary during operation of the aircraft propulsion system 100 (*e.g.,* during takeoff, aircraft flight and landing). However, the stationary portion may be otherwise movable, for example, to provide access for inspection or maintenance of the various components that comprise the aircraft propulsion system 100.

The nacelle aft structure 114 includes a translating sleeve 122. The translating sleeve 122 is disposed at the nacelle aft end 108. The translating sleeve 122 extends axially along the axial centerline A (or an axial direction) between a forward end 124 thereof and the nacelle aft end 108. The translating sleeve 122 is configured to partially form an aft outer peripheral boundary of the bypass flow stream. The translating sleeve 122 may also be configured to form a bypass nozzle 126 for the bypass flow stream with an inner fixed structure of the nacelle 104, which nacelle inner fixed structure houses a core of the gas turbine engine. The translating sleeve 122 includes a pair of sleeve segments (*e.g.*, a first translating sleeve segment and a second translating sleeve segment) arranged on opposing sides of the aircraft propulsion system 100 (one such sleeve segment visible in FIGS. 1A and 1B). The present disclosure, however, is not limited to such an exemplary translating sleeve configuration. For example, the translating sleeve 122 may alternatively have a substantially tubular body. For example, in various embodiments, the translating sleeve 122 may extend up to or more than three-hundred and thirty degrees (330°) about the axial centerline A.

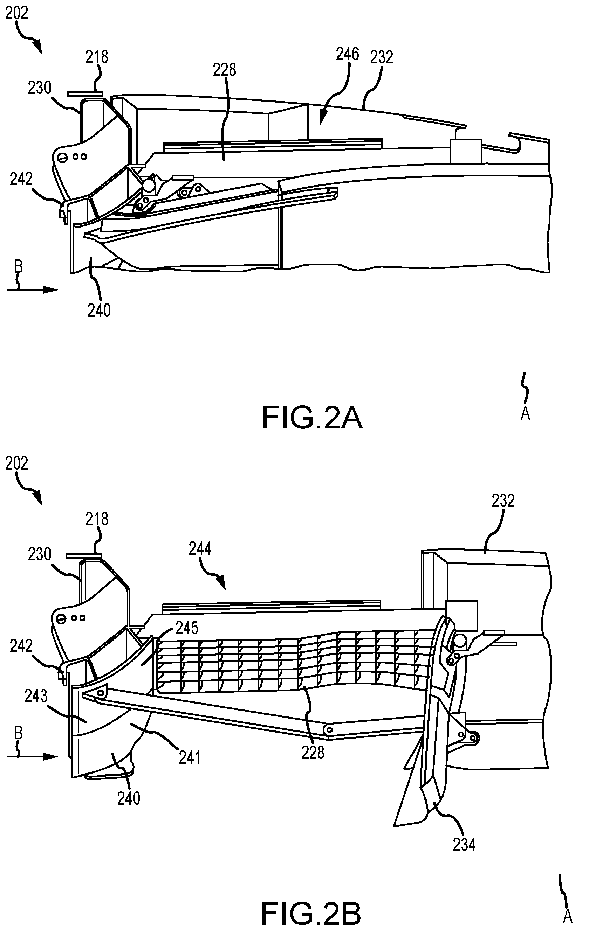

Still referring to FIGS. 1A and 1B, the translating sleeve 122 is an axially translatable structure. Each translating sleeve segment, for example, may be slidably connected to one or more stationary structures (*e.g.*, a pylon and a lower bifurcation) through one or more respective track assemblies. Each track assembly may include a rail mated with a track beam; however, the present disclosure is not limited to the foregoing exemplary sliding connection configuration. With the foregoing configuration, the translating sleeve 122 may translate axially along the axial centerline A and relative to the stationary portion. The translating sleeve 122 may thereby move axially between a forward or stowed position *(see* FIG. 1A) and an aft or deployed position (*see* FIG. 1B). In the forward or stowed position, the translating sleeve 122 provides the functionality described above. In the aft or deployed position, the translating sleeve 122 at least partially (or substantially completely) uncovers at least one or more other components of the thrust reverser 102 such as, but not limited to, a cascade structure 128. In addition, as the translating sleeve 122 moves from the stowed position to the deployed position, one or more blocker doors (*see, e.g.,* the thrust reverser blocker door assembly 234 illustrated in FIG. 2B) arranged with the translating sleeve 122 may be deployed to divert bypass air from the bypass flow stream through the cascade structure 128 to provide reverse thrust.

Referring now to FIGS. 2A and 2B, a partial side-sectional illustration of a thrust reverser 202, similar to the thrust reverser 102 described above with reference to FIGS. 1A and 1B, is provided, in both a stowed position (*see* FIG. 2A) and a deployed position (*see* FIG. 2B). Without loss of generality, the thrust reverser 202 includes a nacelle fixed structure 230, a nacelle translating structure 232 and a thrust reverser blocker door assembly 234. The nacelle fixed structure 230 is located at an aft end 218 of a stationary portion of a nacelle, such as, for example, the aft end 118 of the stationary portion of the nacelle 104 described above with reference to FIGS. 1A and 1B. Note that while the following disclosure is described in part with reference to the thrust reverser 202 and the thrust reverser blocker door assembly 234, the disclosure contemplates applicability to other types of thrust reversers and blocker door assemblies, including, for example, traditional drag-link style blocker doors mounted on an inner fixed structure. Accordingly, the disclosure should not be construed as limited to the thrust reverser and the related components illustrated at FIGS. 2A and 2B.

The nacelle fixed structure 230 includes a bullnose ramp 240 (or a bullnose) and an internal nacelle support structure 242. Note the term "bullnose" originates from the rounded nose of a bull and typically refers to a smooth, rounded structure or a rounded edge on a surface or object having a smooth, rounded or finished appearance. The bullnose ramp 240 is configured to provide a smooth aerodynamic transition from a bypass flow stream B to a thrust reverser duct 244, which extends axially between the internal nacelle support structure 242 and the nacelle translating structure 232. In various embodiments, the internal nacelle support structure 242 circumscribes and supports the bullnose ramp 240. The internal nacelle support structure 242 also provides a base to which a cascade structure 228, similar to the cascade structure 128 described above with reference to FIGS. 1A and 1B, may be mounted. The cascade structure 228 may thereby project axially aft from the internal nacelle support structure 242 and downstream of the bullnose ramp 240. With such a configuration, when the nacelle translating structure 232 is in the stowed position (see FIG. 2A), the cascade structure 228 is located within an internal cavity 246 of the nacelle translating structure 232. When the nacelle translating structure 232 is in the deployed position (see FIG. 2B), the cascade structure 228 is uncovered and located within the thrust reverser duct 244.

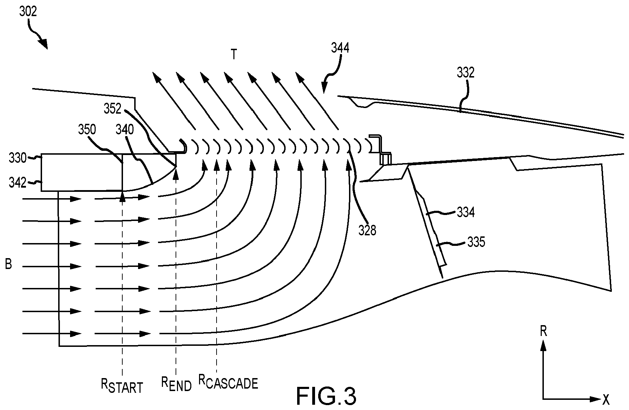

Referring now to FIG. 3, a schematic side-sectional view of a thrust reverser 302, similar to the thrust reverser 202 described above with reference to FIGS. 2A and 2B, is provided and illustrated in a deployed position. Similar to the description above, the thrust reverser 302 includes a nacelle fixed structure 330, a nacelle translating structure 332 and a thrust reverser blocker door assembly 334. The nacelle fixed structure 330 includes a bullnose ramp 340 (or a bullnose) and an internal nacelle support structure 342. The bullnose ramp 340 is configured to provide a smooth aerodynamic transition from a bypass flow stream B to a thrust reverser duct 344, which extends axially between the internal nacelle support structure 342 and the nacelle translating structure 332. In various embodiments, the internal nacelle support structure 342 circumscribes and supports the bullnose ramp 340. The internal nacelle support structure 342 also provides a base to which a cascade structure 328, similar to the cascade structure 228 described above with reference to FIGS. 2A and 2B, may be mounted. The cascade structure 328 may thereby project axially aft from the internal nacelle support structure 342 and downstream of the bullnose ramp 340.

When the nacelle translating structure 332 is in the deployed position, the cascade structure 328 is uncovered and located within the thrust reverser duct 344. At the same time, a blocker door 335 of the thrust reverser blocker door assembly 334 is deployed, thereby blocking the bypass flow stream B from exiting the bypass flow stream exhaust and forcing the bypass flow stream to turn radially outward and exit the cascade structure 328 as a reverse thrust flow stream T. As described above, the bullnose ramp 340 provides an aerodynamic surface that functions to smoothly turn the bypass flow stream B toward the cascade structure 328. As described in further detail below, the bullnose ramp 340 may be characterized by a bullnose profile (or a ramp profile) that extends from a forward axial position 350 (or an axial ramp start) to an aft axial position 352 (or an axial ramp end). The bullnose profile may be characterized as a functional relationship between a radius R as a function of axial length X between the forward axial position 350 and the aft axial position 352. Additional parameters that may be used to characterize the bullnose profile and the radial position of the cascade structure 328 include the radius R of the forward axial position 350, R_{START}, the radial position at the aft axial position 352, R_{END}, and the radius of the cascade structure 328, R_{CASCADE}.

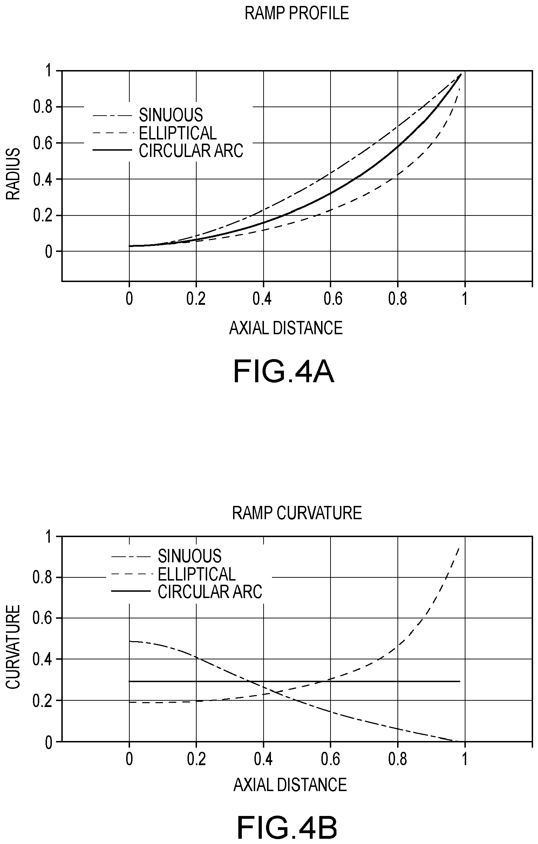

Referring now to FIGS. 4A and 4B, graphs illustrating various ramp profiles and curvature profiles for a bullnose ramp are illustrated. Note the term curvature profile is used to enable the curvature to vary along an axial extent of the ramp profile, rather than be constant along the ramp profile. Referring to FIG. 4A, three mathematical profiles - sinuous, elliptical and circular - are provided. The axial position along the X-axis is normalized to run from zero to unity, with zero corresponding to a forward axial position (*e.g.,* the forward axial position 350) and unity corresponding to an aft axial position (*e.g.,* the aft axial position 352) of a bullnose ramp (*e.g.*, the bullnose ramp 340). Similarly, the radial position along the Y-axis is normalized to run from zero to unity, with zero corresponding to R_{START} and unity corresponding to R_{END} of the bullnose ramp. Referring to FIG. 4B, normalized values of curvature for the three mathematical profiles - sinuous, elliptical and circular - are provided. The axial position along the X-axis is normalized in the same fashion as for FIG. 4A, while the curvature along the Y-axis is suitably normalized to run from zero to unity. An important distinction to recognize from the profiles presented in FIGS. 4A and 4B is the relative degree of curvature for each of the profiles. For example, the curvature of the sinuous profile starts at a start value (Y ≈ 0.50) at the forward axial position, which is relatively high with respect to an end value (Y ≈ 0.00) at the aft axial position, where Y indicates the value of curvature on the Y-axis as a function of the axial distance X on the X-axis (or axial extent along the X-axis). Conversely, the curvature of the elliptical profile starts at a start value (Y ≈ 0.20) at the forward axial position, which is relatively low with respect to an end value (Y ≈ 1.00) at the aft axial position. As expected, the curvature for the circular arc is constant along the axial extent of the profile. Note the foregoing values of Y refer to the local values of curvature illustrated at FIG. 4B, with the local values of curvature along the X-axis generally understood to mean a reciprocal of the local radii of curvature along the X-axis.

The foregoing profiles may be considered in the design of a bullnose ramp for various thrust reverser configurations. However, current research suggests the profiles are not optimal for maximizing mass flow through a cascade, which, if successful, may result in an engine design configured to experience less drag during flight via shortening the thrust reverser portion of the engine. More specifically, maximizing the mass flow through the cascade enables the use of shorter cascades where flow separation along the bullnose ramp is reduced. Reducing the amount of flow separation along the bullnose ramp, particularly at the forward region of the cascade, enables an increase in the mass flow through the cascade and a more uniform reverse thrust flow stream T *(see* FIG. 3). Conversely, where substantial flow separation develops along the bullnose ramp and in the region radially inward of the forward region of the cascade, the velocity vectors through the cascade at the forward region of the cascade may be reduced in magnitude, thereby reducing the mass flow through the cascade and thereby reducing the magnitude of the reverse thrust.

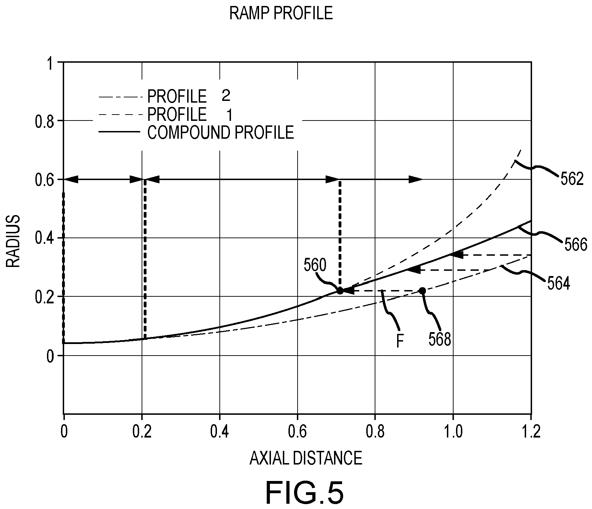

Referring now to FIG. 5, a compound profile for a bullnose ramp, such as, for example, the bullnose ramp 240 described above with reference to FIGS. 2A and 2B and the bullnose ramp 340 described above with reference to FIG. 3, is illustrated. In various embodiments, solutions to the drawbacks described above, including reducing flow separation along the bullnose ramp, particularly in the region radially inward of the forward region of the cascade are accomplished by introducing a transition portion, which, in various embodiments, may be represented by a discontinuity 560, in the profile of the bullnose ramp, with the discontinuity 560 separating a first profile 562 (or a first axial profile) from a second profile 564 (or a second axial profile), where the two profiles exhibit different degrees of curvature along their axial extent. For example, as illustrated at FIG. 5, the first profile 562 ("Profile 1") exhibits a larger or greater degree of curvature along the length of the profile (or a smaller or lesser radius of curvature) than does the second profile 564 ("Profile 2"). Thus, the first profile 562 may be characterized by a first curvature profile or a first set of curvature values that extend along the axial length of Profile 1, while the second profile 564 may be characterized by a second curvature profile or a second set of curvature values that extend along the axial length of Profile 2. A compound profile 566 is constructed by employing the first profile 562 from a forward axial position (X ≈ 0.00) (*e.g.*, the forward axial position 350 described above with reference to FIG. 3) to an intermediate axial position (X ≈ 0.70) where the discontinuity is positioned. The compound profile 566 then continues from the discontinuity 560 by incorporating the second profile 564 to an aft axial position (X ≈ 1.00) (*e.g.,* the aft axial position 352 described above with reference to FIG. 3). In various embodiments, the second profile 564 is incorporated into the compound profile 566 by translating the second profile 564 in a forward direction F, from an axial position (X ≈ 0.90), where the radial value 568 of the second profile 564 is equal to the radial value of the first profile 562 at the discontinuity 560, to the end of the second profile (X ≈ 1.20), with the shift, ΔX, being approximately equal to ΔX ≈ 0.2, as illustrated. Note each of Profile 1 and Profile 2 is also, according to the claimed invention, characterized by a slope (*e.g.*, the first derivative of the ramp profile) or may also, in examples not forming part of the claimed invention, be characterized by a rate of change in slope (*e.g.*, the second derivative of the ramp profile) along the axial extent. Note also the ramp profile extending along the transition portion and, in particular, the discontinuity 560, may be characterized as being C⁰, C¹ or C² continuous.

The manner of translation described above, where the first profile 562 and the second profile 564 exhibit differing values of curvature along their lengths, assures the existence of the discontinuity 560 in the compound profile 566, with the discontinuity being, for example, in the slope of the compound profile 566. Referring briefly to FIG. 2B, the discontinuity may be manifest as a crease 241 that extends along an intersection of the bullnose ramp 240 between a forward portion 243 (represented by the first profile 562) and an aft portion 245 (represented by the second profile 564). As illustrated, the crease 241 extends about the bullnose ramp 240 at an essentially constant axial position. In various embodiments, the axial location of the discontinuity 560 (or the crease 241 illustrated in FIG. 2B), is determined through experimental or computational analysis of the expected axial location of the onset of flow separation following deployment of the thrust reverser. Positioning the discontinuity 560 at an axial location proximate the onset of flow separation allows, or even induces, the flow to separate and then immediately reattach downstream of the discontinuity 560 and on the second profile 564, which, as described above, is characterized by a second set of curvature values having a generally smaller curvature (or larger radius of curvature) than that of a first set of curvature values that characterize the first profile 562. The smaller curvature of the second profile 564 provides a surface less amenable to flow separation throughout the remainder of the compound profile 566, thereby providing a more uniform flow, particularly at the forward region of the cascade, which thereby enables an increase in the mass flow through the cascade and a more uniform reverse thrust flow stream T (*see* FIG. 3). Note that instead of characterizing the profiles by sets of curvature values, the first and second sets of curvature values might be further characterized by integrating the curvature along the lengths of the first and second profiles (taking care to scale any differences in lengths of the profiles) to obtain scalar results representative of the average curvature of the two profiles.

The foregoing disclosure provides an apparatus and method to improve or increase the mass flow rate through a cascade of a thrust reverser. The bullnose structures disclosed above, which include the surface profiles of the structures generally immediately upstream of the cascade, prevent or impede flow separation in an upstream region of the cascade where a bypass flow stream is being turned or redirected into the bypass duct where the cascade is positioned. The characteristics of the improved flow field (*e.g.,* a flow field exhibiting minimal flow separation from the surface of the bullnose) enables the use of cascades having reduced axial length. A reduction in the axial length of the cascade enables a reduction in the length of the translating sleeve of the thrust reverser, thereby reducing weight of the propulsion system and reducing aerodynamic drag experienced at the outer surface of the nacelle of the propulsion system during flight.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the invention is accordingly to be limited by nothing other than the appended claims.

## Claims

1. A bullnose ramp (240, 340) for use in a thrust reverser, comprising:
a forward portion (243), the forward portion (243) **characterized by** a first profile (562) having a first slope and extending from a forward axial position (350) to an intermediate axial position;
an aft portion (245), the aft portion (245) **characterized by** a second profile (564) having a second slope and extending from the intermediate axial position to an aft axial position (352); and
a transition portion (560) positioned at the intermediate axial position between the forward portion (243) and the aft portion (245), the transition portion (560) defining a change in slope from the first slope to the second slope between the first profile (562) and the second profile (564).

2. The bullnose ramp (240, 340) of claim 1, wherein the change in slope between the forward portion (243) and the aft portion (245) is represented by a discontinuity (560).

3. The bullnose ramp (240, 340) of claim 2, wherein the discontinuity (560) extends between the forward portion (243) and the aft portion (245) at an essentially constant axial position with respect to an axial direction.

4. The bullnose ramp (240, 340) of claim 1, 2 or 3, wherein the forward portion (243) is configured to induce separation of a bypass flow stream (B) from a surface of the bullnose ramp (240, 340) and the aft portion (245) is configured to induce reattachment of the bypass flow stream (B) to the surface of the bullnose ramp (240, 340).

5. The bullnose ramp (240, 340) of any preceding claim, wherein the first profile (562) is a first sinuous profile with respect to an axial direction.

6. The bullnose ramp (240, 340) of claim 5, wherein the first sinuous profile is **characterized by** a first curvature profile, the first curvature profile extending from the forward axial position of the bullnose ramp (240, 340) to the transition portion (560).

7. The bullnose ramp (240, 340) of claim 5 or 6, wherein the second profile (564) is a second sinuous profile with respect to the axial direction.

8. The bullnose ramp (240, 340) of claim 7, wherein the second sinuous profile is **characterized by** a second curvature profile, the second curvature profile extending from the transition portion (560) to the aft axial position of the bullnose ramp (240, 340).

9. The bullnose ramp (240, 340) of claims 6 and 8, wherein the first curvature profile is **characterized by** a first set of curvature values, the second curvature profile is **characterized by** a second set of curvature values, and the second set of curvature values is lesser in magnitude than the first set of curvature values.

10. A thrust reverser (202, 302), comprising:
a cascade (228, 328); and
the bullnose ramp (240, 340) of any preceding claim disposed in an axial direction upstream of the cascade (228, 328).

11. The thrust reverser (202, 302) of claim 10, wherein the change in slope between the forward portion (243) and the aft portion (245) is represented by a discontinuity (560) in at least one of the change in slope or a rate of change in the change in slope.

12. The thrust reverser of claim 11, wherein the discontinuity (560) extends between the forward portion (243) and the aft portion (245) at an essentially constant axial position with respect to the axial direction.

13. An assembly for an aircraft propulsion system, comprising:
a nacelle (104), the nacelle (104) including a nacelle translating structure (232, 332);
a cascade (228, 328) disposed within a thrust reverser duct (244, 344);
a blocker door (335) configured to block a portion of a bypass flow stream (B); and
the bullnose ramp (240, 340) of any of claims 1 to 9 disposed in an axial direction upstream of the cascade (228, 328), wherein the first profile is a first axial profile, and the second profile is a second axial profile.

14. The assembly of claim 13, wherein the change in slope between the forward portion (243) and the aft portion (245) is represented by a discontinuity (560) in at least one of the change in slope or a rate of change in the change in slope.

15. The assembly of claim 13 or 14, wherein the change in slope extends between the forward portion (243) and the aft portion (245) at an essentially constant axial position with respect to the axial direction.

## Patentansprüche

1. Bullnose-Rampe (240, 340) zur Verwendung in einem Schubumkehrer, umfassend:
einen vorderen Abschnitt (243), wobei der vordere Abschnitt (243) durch ein erstes Profil (562) gekennzeichnet ist, das eine erste Neigung aufweist und sich von einer vorderen axialen Position (350) zu einer axialen Zwischenposition erstreckt;
einen hinteren Abschnitt (245), wobei der hintere Abschnitt (245) durch ein zweites Profil (564) gekennzeichnet ist, das eine zweite Neigung aufweist und sich von der axialen Zwischenposition zu einer hinteren axialen Position (352) erstreckt; und
einen Übergangsabschnitt (560), der an der axialen Zwischenposition zwischen dem vorderen Abschnitt (243) und dem hinteren Abschnitt (245) positioniert ist, wobei der Übergangsabschnitt (560) einen Neigungswechsel von der ersten Neigung zu der zweiten Neigung zwischen dem ersten Profil (562) und dem zweiten Profil (564) definiert.

2. Bullnose-Rampe (240, 340) nach Anspruch 1, wobei die Neigungsänderung zwischen dem vorderen Abschnitt (243) und dem hinteren Abschnitt (245) durch eine Diskontinuität (560) dargestellt ist.

3. Bullnose-Rampe (240, 340) nach Anspruch 2, wobei sich die Diskontinuität (560) zwischen dem vorderen Abschnitt (243) und dem hinteren Abschnitt (245) an einer im Wesentlichen konstanten axialen Position in Bezug auf eine axiale Richtung erstreckt.

4. Bullnose-Rampe (240, 340) nach Anspruch 1, 2 oder 3, wobei der vordere Abschnitt (243) dazu konfiguriert ist, eine Trennung eines Umgehungsdurchflussstroms (B) von einer Oberfläche der Bullnose-Rampe (240, 340) zu bewirken, und der hintere Abschnitt (245) dazu konfiguriert ist, eine Wiederanbringung des Umgehungsdurchflussstroms (B) an der Oberfläche der Bullnose-Rampe (240, 340) zu bewirken.

5. Bullnose-Rampe (240, 340) nach einem der vorhergehenden Ansprüche, wobei das erste Profil (562) in Bezug auf eine axiale Richtung ein erstes gewundenes Profil ist.

6. Bullnose-Rampe (240, 340) nach Anspruch 5, wobei das erste gewundene Profil durch ein erstes Krümmungsprofil gekennzeichnet ist, wobei sich das erste Krümmungsprofil von der vorderen axialen Position der Bullnose-Rampe (240, 340) zu dem Übergangsabschnitt (560) erstreckt.

7. Bullnose-Rampe (240, 340) nach Anspruch 5 oder 6, wobei das zweite Profil (564) in Bezug auf die axiale Richtung ein zweites gewundenes Profil ist.

8. Bullnose-Rampe (240, 340) nach Anspruch 7, wobei das zweite gewundene Profil durch ein zweites Krümmungsprofil gekennzeichnet ist, wobei sich das zweite Krümmungsprofil von dem Übergangsabschnitt (560) zu der hinteren axialen Position der Bullnose-Rampe (240, 340) erstreckt.

9. Bullnose-Rampe (240, 340) nach den Ansprüchen 6 und 8, wobei das erste Krümmungsprofil durch einen ersten Satz von Krümmungswerten gekennzeichnet ist, das zweite Krümmungsprofil durch einen zweiten Satz von Krümmungswerten gekennzeichnet ist und der zweite Satz von Krümmungswerten eine geringere Größe als der erste Satz von Krümmungswerten aufweist.

10. Schubumkehrer (202, 302), umfassend:
eine Kaskade (228, 328); und
die Bullnose-Rampe (240, 340) nach einem der vorhergehenden Ansprüche, die in einer axialen Richtung stromaufwärts der Kaskade (228, 328) angeordnet ist.

11. Schubumkehrer (202, 302) nach Anspruch 10, wobei die Neigungsänderung zwischen dem vorderen Abschnitt (243) und dem hinteren Abschnitt (245) durch eine Diskontinuität (560) in mindestens einer von der Neigungsänderung oder einer Änderungsrate der Neigungsänderung dargestellt wird.

12. Schubumkehrer nach Anspruch 11, wobei sich die Diskontinuität (560) zwischen dem vorderen Abschnitt (243) und dem hinteren Abschnitt (245) an einer im Wesentlichen konstanten axialen Position in Bezug auf die axiale Richtung erstreckt.

13. Baugruppe für ein Luftfahrzeugantriebssystem, umfassend:
eine Gondel (104), wobei die Gondel (104) eine Gondelverschiebestruktur (232, 332) umfasst;
eine Kaskade (228, 328), die innerhalb eines Schubumkehrkanals (244, 344) angeordnet ist;
eine Blockiertür (335), die dazu konfiguriert ist, einen Abschnitt eines Umgehungsdurchflussstroms (B) zu blockieren; und
die Bullnose-Rampe (240, 340) nach einem der Ansprüche 1 bis 9, die in einer axialen Richtung stromaufwärts der Kaskade (228, 328) angeordnet ist, wobei das erste Profil ein erstes axiales Profil ist und das zweite Profil ein zweites axiales Profil ist.

14. Baugruppe nach Anspruch 13, wobei die Neigungsänderung zwischen dem vorderen Abschnitt (243) und dem hinteren Abschnitt (245) durch eine Diskontinuität (560) in mindestens einer von der Neigungsänderung oder einer Änderungsrate der Neigungsänderung dargestellt wird.

15. Baugruppe nach Anspruch 13 oder 14, wobei sich die Neigungsänderung zwischen dem vorderen Abschnitt (243) und dem hinteren Abschnitt (245) an einer im Wesentlichen konstanten axialen Position in Bezug auf die axiale Richtung erstreckt.

## Revendications

1. Rampe arrondie (240, 340) pour une utilisation dans un inverseur de poussée, comprenant :
une partie avant (243), la partie avant (243) étant **caractérisée par** un premier profil (562) ayant une première pente et se prolongeant d'une position axiale avant (350) à une position axiale intermédiaire ;
une partie arrière (245), la partie arrière (245) étant **caractérisée par** un second profil (564) ayant une seconde pente et se prolongeant de la position axiale intermédiaire à une position axiale arrière (352) ; et
une partie de transition (560) positionnée à la position axiale intermédiaire entre la partie avant (243) et la partie arrière (245), la partie de transition (560) définissant un changement de pente de la première pente à la seconde pente entre le premier profil (562) et le second profil (564).

2. Rampe arrondie (240, 340) selon la revendication 1, dans laquelle le changement de pente entre la partie avant (243) et la partie arrière (245) est représenté par une discontinuité (560) .

3. Rampe arrondie (240, 340) selon la revendication 2, dans laquelle la discontinuité (560) se prolonge entre la partie avant (243) et la partie arrière (245) à une position axiale essentiellement constante par rapport à une direction axiale.

4. Rampe arrondie (240, 340) selon la revendication 1, 2 ou 3, dans laquelle la partie avant (243) est configurée pour induire la séparation d'un flux de dérivation (B) d'une surface de la rampe arrondie (240, 340) et la partie arrière (245) est configurée pour induire le rattachement du flux de dérivation (B) à la surface de la rampe arrondie (240, 340).

5. Rampe arrondie (240, 340) selon une quelconque revendication précédente, dans laquelle le premier profil (562) est un premier profil sinueux par rapport à une direction axiale.

6. Rampe arrondie (240, 340) selon la revendication 5, dans laquelle le premier profil sinueux est **caractérisé par** un premier profil de courbure, le premier profil de courbure se prolongeant de la position axiale avant de la rampe arrondie (240, 340) à la partie de transition (560).

7. Rampe arrondie (240, 340) selon la revendication 5 ou 6, dans laquelle le second profil (564) est un second profil sinueux par rapport à la direction axiale.

8. Rampe arrondie (240, 340) selon la revendication 7, dans laquelle le second profil sinueux est **caractérisé par** un second profil de courbure, le second profil de courbure se prolongeant de la partie de transition (560) à la position axiale arrière de la rampe arrondie (240, 340).

9. Rampe arrondie (240, 340) selon les revendications 6 et 8, dans laquelle le premier profil de courbure est **caractérisé par** un premier ensemble de valeurs de courbure, le second profil de courbure est **caractérisé par** un second ensemble de valeurs de courbure, et le second ensemble de valeurs de courbure sont inférieures en amplitude au premier ensemble de valeurs de courbure.

10. Inverseur de poussée (202, 302), comprenant :
une cascade (228, 328) ; et
la rampe arrondie (240, 340) selon une quelconque revendication précédente étant disposée dans une direction axiale en amont de la cascade (228, 328).

11. Inverseur de poussée (202, 302) selon la revendication 10, dans lequel le changement de pente entre la partie avant (243) et la partie arrière (245) est représenté par une discontinuité (560) dans au moins l'un du changement de pente ou d'un taux de variation du changement de pente.

12. Inverseur de poussée selon la revendication 11, dans lequel la discontinuité (560) se prolonge entre la partie avant (243) et la partie arrière (245) à une position axiale essentiellement constante par rapport à la direction axiale.

13. Ensemble pour un système de propulsion d'aéronef, comprenant :
une nacelle (104), la nacelle (104) comportant une structure de translation de nacelle (232, 332) ;
une cascade (228, 328) disposée à l'intérieur d'un conduit d'inverseur de poussée (244, 344) ;
une porte de blocage (335) configurée pour bloquer une partie d'un flux de dérivation (B) ; et
la rampe arrondie (240, 340) selon l'une quelconque des revendications 1 à 9 étant disposée dans une direction axiale en amont de la cascade (228, 328), dans lequel le premier profil est un premier profil axial, et le second profil est un second profil axial.

14. Ensemble selon la revendication 13, dans lequel le changement de pente entre la partie avant (243) et la partie arrière (245) est représenté par une discontinuité (560) dans au moins l'un du changement de pente ou d'un taux de variation du changement de pente.

15. Ensemble selon la revendication 13 ou 14, dans lequel le changement de pente se prolonge entre la partie avant (243) et la partie arrière (245) dans une position axiale essentiellement constante par rapport à la direction axiale.
